# EUROPEAN PATENT APPLICATION

(11) **EP 4 543 017 A1**
(43) Date of publication of application: **23.04.2025**
(21) Application number: 22951244.7
(22) Date of filing: 15.07.2022
(51) Int. Cl.: H04N 21/43, H04N 21/4363, H04N 21/436, H04N 21/485, H04N 21/488, H04N 21/81

(54) **WIRELESS DEVICE AND WIRELESS DISPLAY SYSTEM**

(71) Applicant: LG Electronics Inc., Yeongdeungpo-gu Seoul 07336 (KR)
(72) Inventor: SHIN, Byounghyun, Seoul 06772 (KR); BAE, Kyungnam, Seoul 06772 (KR); KIM, Taeyoung, Seoul 06772 (KR); HAN, Donghee, Seoul 06772 (KR)
(74) Representative: Vossius & Partner Patentanwälte Rechtsanwälte mbB
(86) International application number: PCT/KR2022/010395
(87) International publication number: WO 2024/014589

(57) **Abstract**

A wireless device for providing a screen sharing service with an external device, according to an embodiment of the present disclosure, may comprise: a display unit for displaying a content image; a wireless communication unit for transmitting a content image signal corresponding to the content image to the external device; and a control unit that detects, on the basis of information, whether an on screen display (OSD) event has occurred, displays, when the OSD event has occurred, an OSD image on the display unit, and transmits, to the external device, the content image signal and an OSD image signal corresponding to the OSD image.

## Description

### TECHNICAL FIELD

The present disclosure relates to a wireless device, and more particularly, to a wireless device providing a screen sharing service.

### BACKGROUND ART

Recently, with advancement of information and communication technology, various wireless communication technologies are being developed. Among these, wireless LAN (WLAN) is a technology that allows wireless Internet access in homes, businesses, or specific service areas using portable terminals such as personal digital assistants (PDAs), laptop computers, and portable multimedia players (PMPs) based on radio frequency technologies.

The wireless LAN may be a direct communication technology that allows devices to be easily connected to each other without a wireless access point (AP) that is basically required in existing wireless LAN systems, and an introduction of Wi-Fi direct or Wi-Fi peer-to- peer (P2P) is being discussed. According to Wi-Fi Direct standard technologies, the devices may be connected to each other without performing a complex setup process and may support data exchange at a communication speed of a general wireless LAN system to provide various services to users.

Recently, various Wi-Fi-supporting devices are being used, and among these,

the number of Wi-Fi Direct-supporting devices that enable communication between the Wi-Fi devices without the AP is increasing. Technologies to introduce a platform that supports various services (e.g. send, play, display, print, etc.) using Wi-Fi direct links are being discussed in a Wi-Fi alliance (WFA). This may be called Wi-Fi direct service (WFDS).

In the WFDS, there is a display service that enables screen sharing between the devices. The screen sharing service is also called a screen mirroring technology in that the wireless devices display the same image through image transmission.

Currently, a transmission-side device transmits a video to a reception-side device. If the transmission-side device does not output the video, for example, such as outputting of an audio channel, outputting of a no signal channel, or outputting of a screen lock setting channel, the reception-side device may not receive the video.

In this case, the reception-side device may output a previous freeze-screen or a black screen to cause inconvenience to the user's viewing experience.

In addition, if caption setting is turned on at the transmission-side device, the reception-side device only receives the video without captions, and the user of the reception-side device may not view the captions.

### DISCLOSURE OF THE INVENTION

### TECHNICAL PROBLEM

An object of the present disclosure is to provide a more comfortable viewing experience to a user by determining whether, when providing a screen sharing service, only video has to be transmitted from a transmission-side device to a reception-side device or whether video and on-screen display (OSD) has to transmitted together.

An object of the present disclosure is to determine whether only video has to be transmitted or whether video and on-screen display (OSD) have to be transmitted together so as to vary in capture time point of the video in the transmission-side device.

### TECHNICAL SOLUTION

A wireless device for providing a screen sharing service with an external device according to an embodiment of the present disclosure may include a display unit configured to display a content image, a wireless communication unit configured to transmit a content image signal corresponding to the content image to the external device, and a control unit configured to detect an occurrence of an on-screen display (OSD) event based on information, display an OSD image on the display unit based on the OSD event occurring, and transmit the content image signal and an OSD image signal corresponding to the OSD image to the external device.

A wireless display system including a wireless device, which is configured to provide a screen sharing service, and an external device according to an embodiment of the present disclosure may include a wireless device configured to: display a content image; transmit a content image signal corresponding to the content image to the external device; detect an occurrence of an on-screen display (OSD) event occurs based on information; display an OSD image on the display unit based on the OSD event occurring; and transmit the content image signal and an OSD image signal corresponding to the OSD image to the external device, and the external device configured to display a content mirroring image and an OSD mirroring image based on the content image signal and the OSD image.

### ADVANTAGEOUS EFFECTS

According to the various embodiments of the present disclosure, even in the case that the OSD event occurs in the transmission-side device while providing the screen sharing service, the reception-side device may confirm the OSD event by receiving the OSD image. Therefore, the viewing situation for the reception-side user may be more comfortable.

### BRIEF DESCRIPTION OF THE DRAWINGS

FIG. 1 is a block diagram illustrating a configuration of a display device according to an embodiment of the present disclosure.
FIG. 2 is a block diagram illustrating a remote control device according to an embodiment of the present disclosure.
FIG. 3 is a view illustrating an actual configuration of the remote control device according to an embodiment of the present disclosure.
FIG. 4 is a view illustrating an example of utilizing the remote control device according to an embodiment of the present disclosure.
FIG. 5 is a view for explaining a configuration of a wireless display system according to an embodiment of the present disclosure.
FIG. 6 is a ladder diagram for explaining a process in which a WFD session is established between a WFD source and a WFD sink to provide a screen sharing service according to an embodiment of the present disclosure.

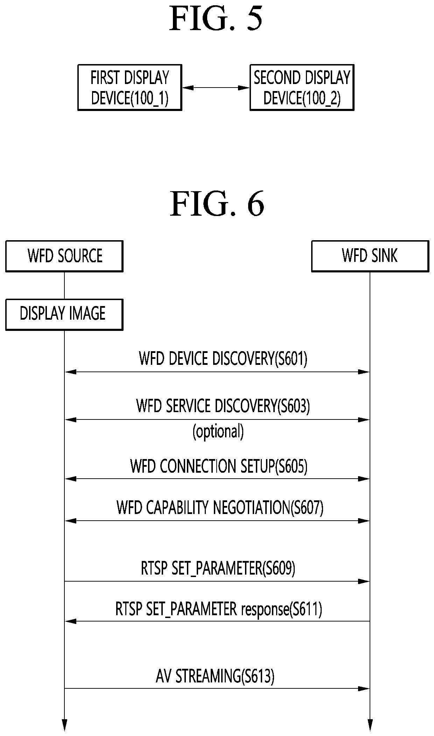

FIG. 6 is a view for explaining a process of changing a capture time point according to a viewing situation of a transmission-side display device when a screen sharing service is provided according to an embodiment of the present disclosure.

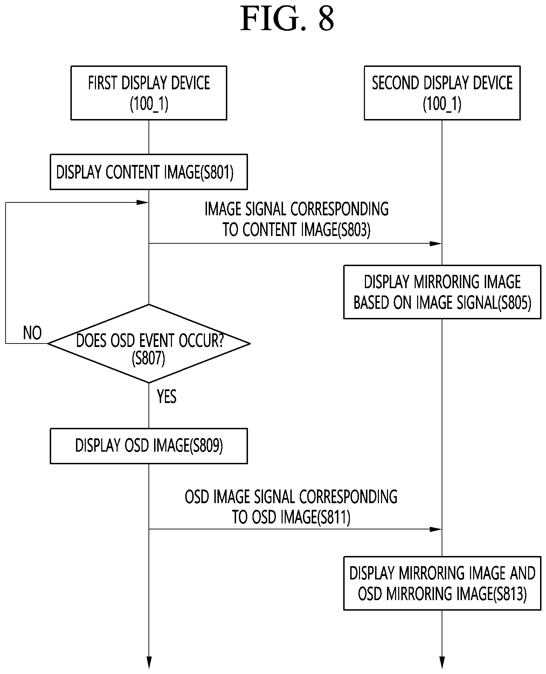

FIG. 8 is a sequence diagram for explaining a method for operating a wireless display system according to an embodiment of the present disclosure.

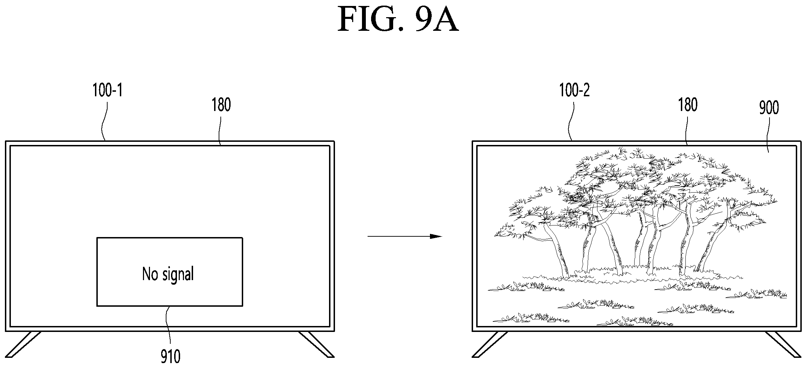

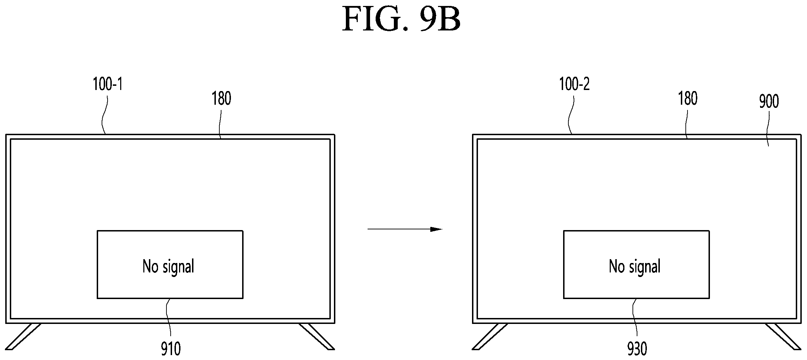

FIGS. 9A and 9B are views comparing the related art with an embodiment of the present disclosure when <no signal> is detected.

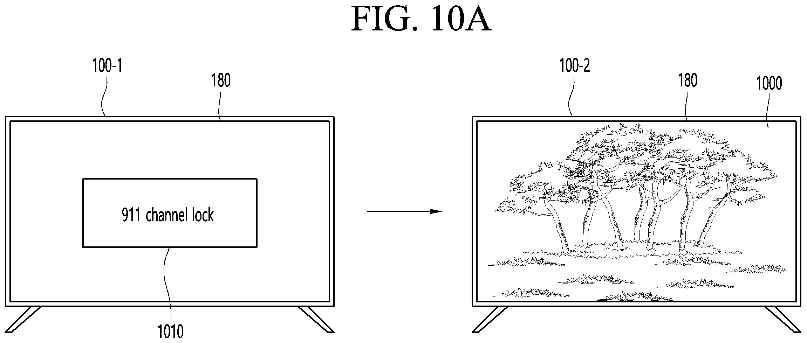

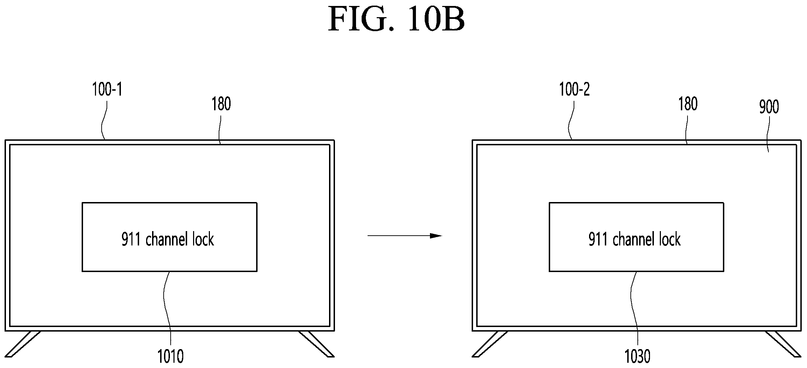

FIGS. 10A and 10B are views comparing the related art with an embodiment of the present disclosure when a lock on a switched channel is set.

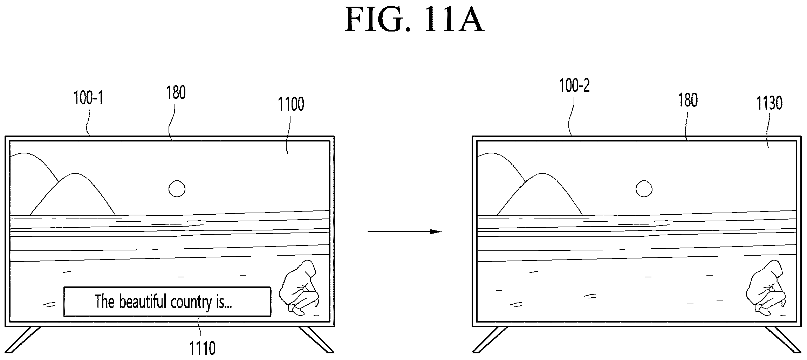

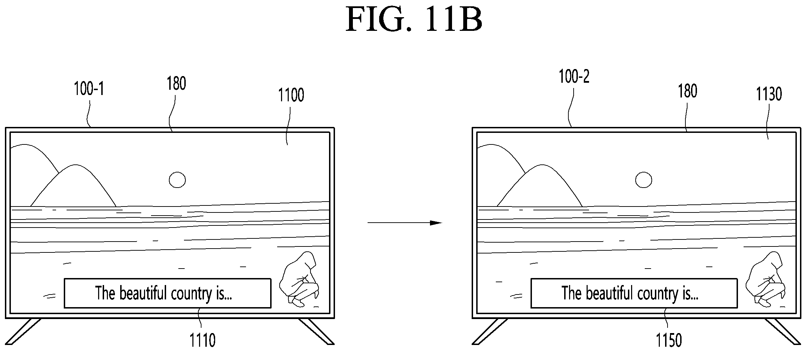

FIGS. 11A and 11B are views comparing the related art with an embodiment of the present disclosure when a caption image exists in a broadcast image.

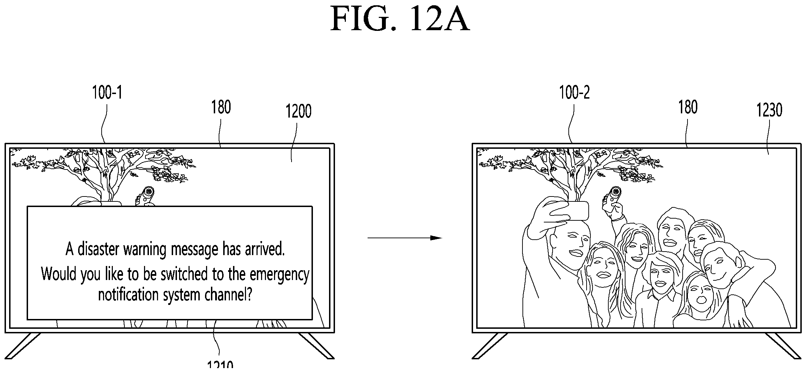

FIGS. 12A and 12bB are views comparing the related art with an embodiment of the present disclosure when a disaster notification occurs.

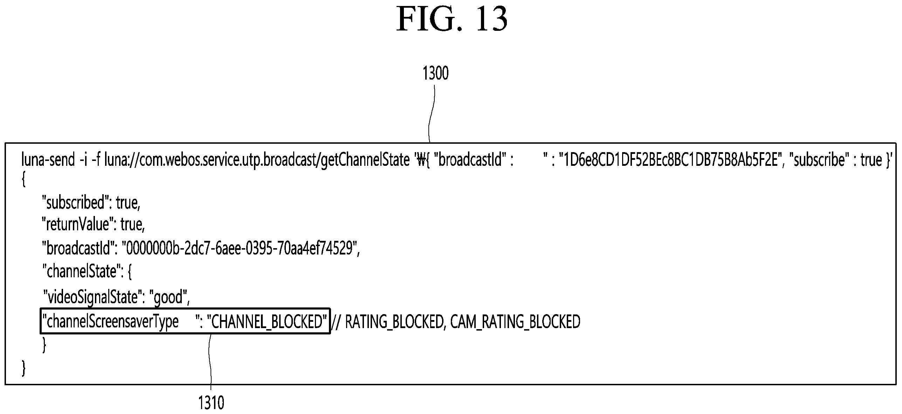

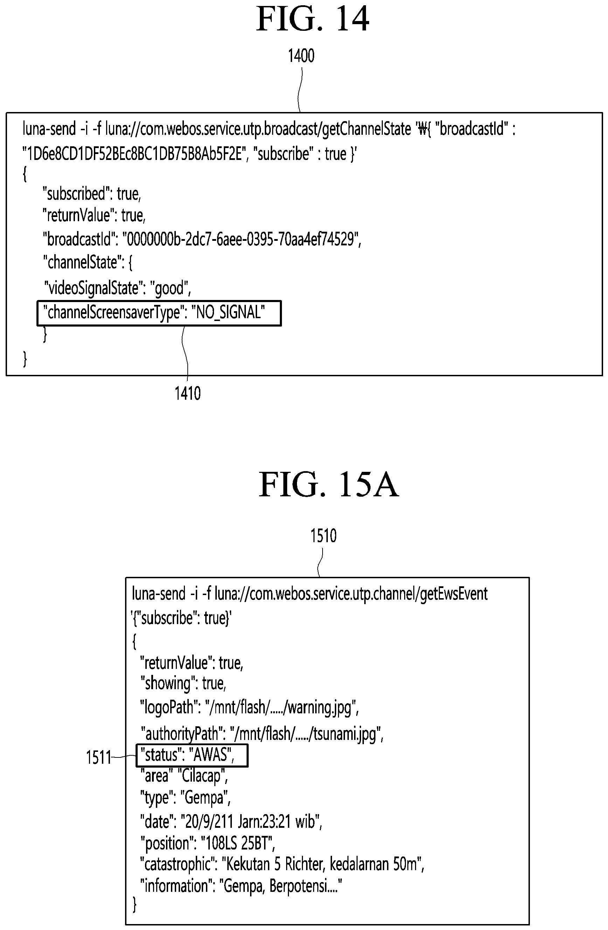

FIGS. 13 and 14 are views for explaining channel state information acquired by a transmission-side display device according to an embodiment of the present disclosure.

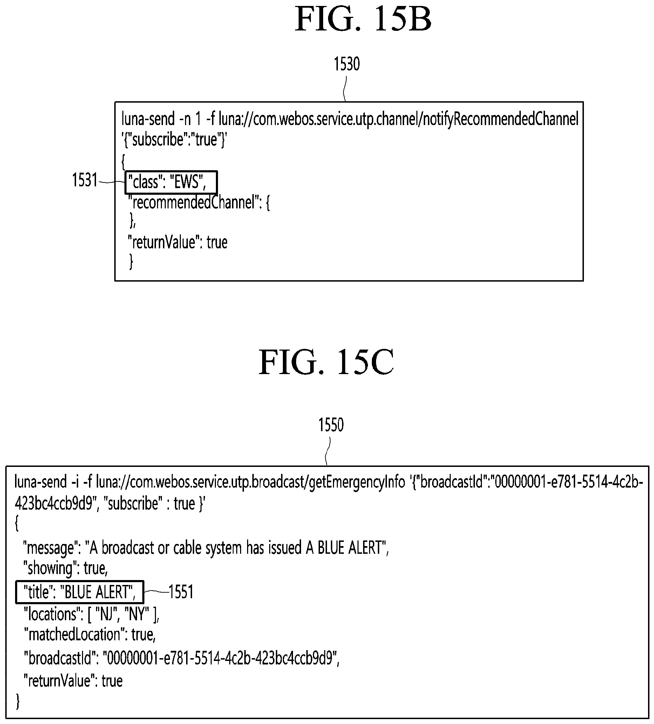

FIGS. 15A to 15C are views for explaining disaster notification information for each country according to an embodiment of the present disclosure.

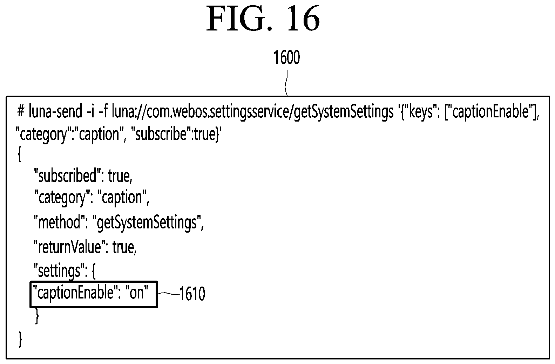

FIG. 16 is a view for explaining caption information according to an embodiment of the present disclosure.

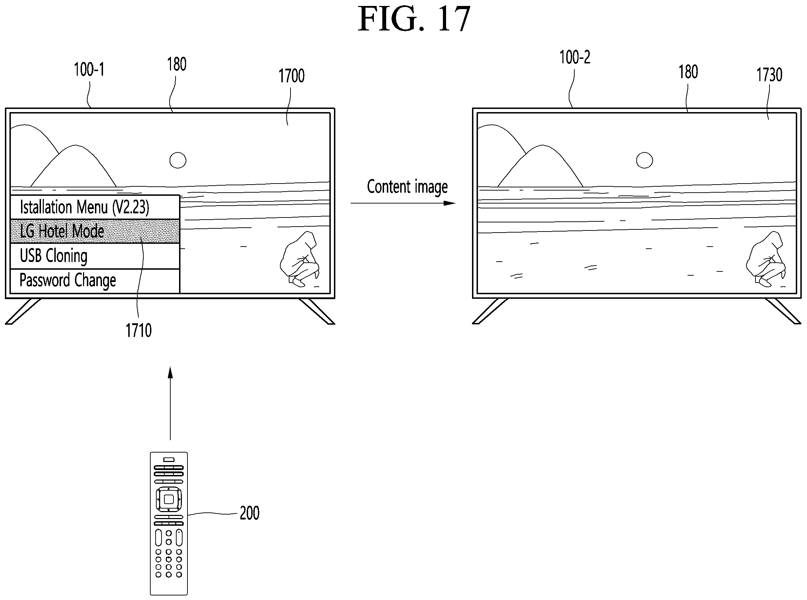

FIG. 17 is a view for explaining a process in which an OSD image generated by a user input is not transmitted when mirroring according to an embodiment of the present disclosure.

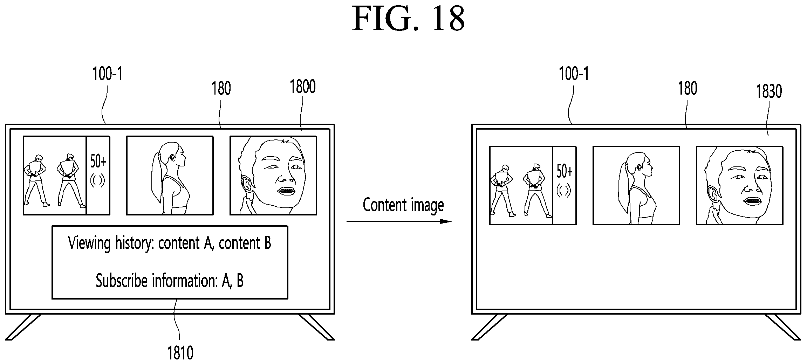

FIG. 18 is a view for explaining a process in which an OSD image containing user information is not transmitted when mirroring according to an embodiment of the present disclosure.

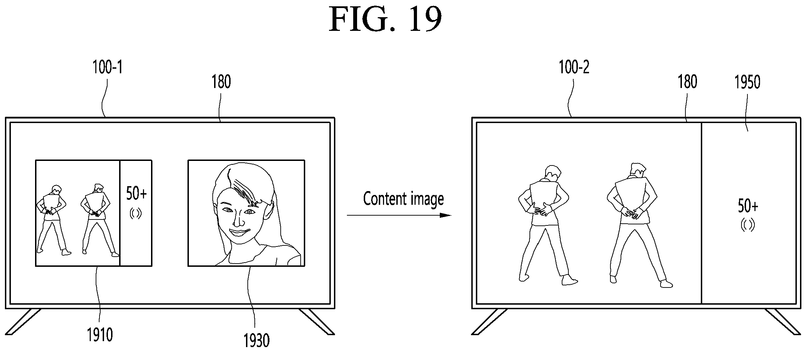

FIG. 19 is a view for explaining a process of mirroring only a partial image, rather than the entire image, in a specific situation according to an embodiment of the present disclosure.

### MODE FOR CARRYING OUT THE INVENTION

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, may have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS may be used.

Accordingly, since various applications are freely added or deleted on a general purpose OS kernel, a display device described herein, for example, may perform various user-friendly functions. The display device, in more detail, may be a network TV, Hybrid Broadcast Broadband TV (HBBTV), smart TV, light-emitting diode (LED) TV, organic light-emitting diode (OLED) TV, and so on and in some cases, may be applied to a smartphone.

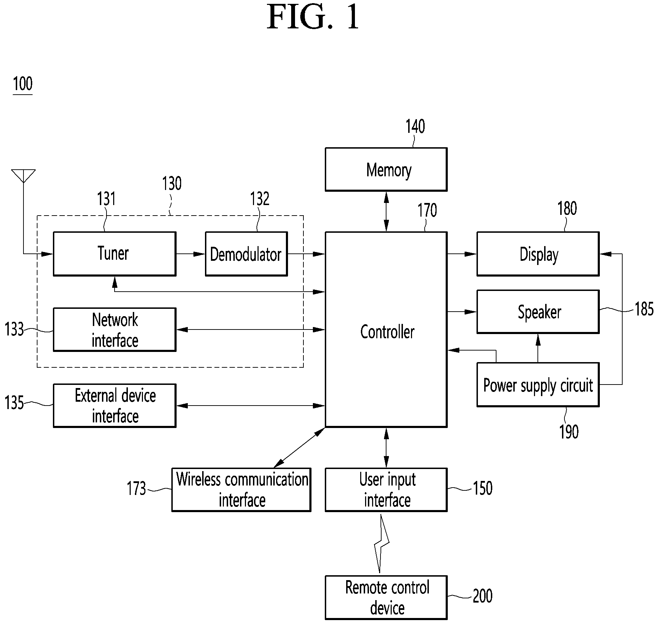

FIG. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, or Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100. Furthermore, in the case that the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in FIG. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display unit 180 and the audio output unit 185.

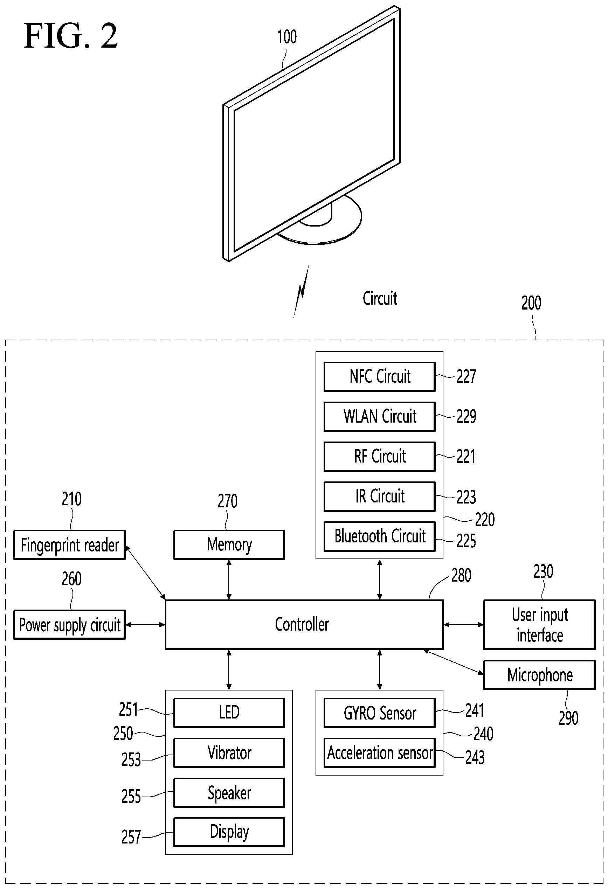

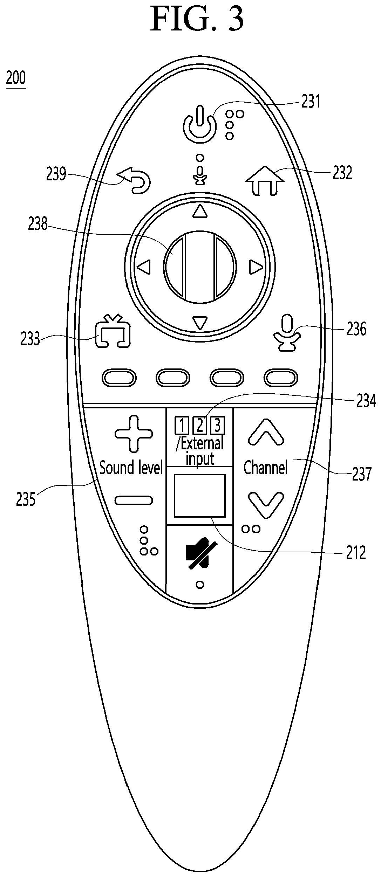

A remote control device according to an embodiment of the present disclosure will be described with reference to FIGS. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to FIG. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and in the case that necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. In the case that the user input unit 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

FIG. 2 is described again.

In the case that the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 based on x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, in the case that the user input unit 230 is manipulated or signals are transmitted/received to/from the display device 100 through the wireless communication unit 220.

Additionally, the power supply unit 260 supplies power to the remote control device 200 and in the case that the remote control device 200 does not move for a predetermined time, stops the power supply, so that power waste may be reduced. The power supply unit 260 may resume the supply of power in the case that a predetermined key provided at the remote control device 200 is operated.

The storage unit 270 may store various kinds of programs and application data required to control or operate the remote control device 200. In the case that the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone 291 and acquire voice through the microphone 291.

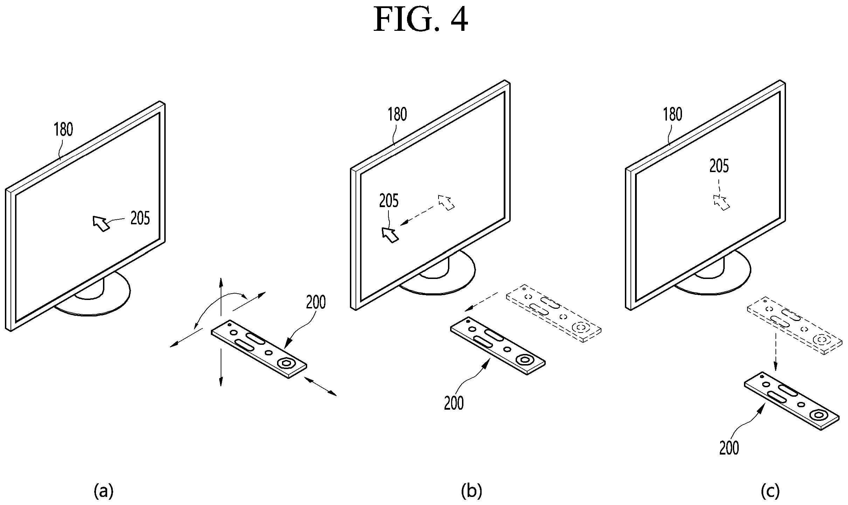

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

FIG. 4(b) illustrates that in the case that a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, in the case that a user moves the remote control device 200 close to the display unit 180, a selection area in the display unit 180 corresponding to the pointer 205 may be zoomed out and displayed in a reduced size.

On the other hand, in the case that the remote control device 200 is moved away from the display unit 180, a selection area may be zoomed out and in the case that the remote control device 200 is moved closer to the display unit 180, a selection area may be zoomed in.

Additionally, in the case that a specific button in the remote control device 200 is pressed, recognition of a vertical or horizontal movement may be excluded. That is, in the case that the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

FIG. 5 is a view for explaining a configuration of a wireless display system according to an embodiment of the present disclosure.

The wireless display system may include a first display device 100-1 and a second display device 100-2.

Each of the first display device 100-1 and the second display device 100-2 may include all of the components illustrated in FIG. 1.

The first display device 100-1 may be a WFD source to be described later, and the second display device 100-2 may be a WFD sink to be described later.

The first display device 100-1 may provide a mirroring service together with the second display device 100-2.

The first display device 100-1 may wirelessly transmit image data for an image that is displaying on the first display device 100-1 to the second display device 100-2.

In this case, a Wi-Fi direct standard may be used to transmit the image data.

Next, referring to FIG. 6, an example in which a WFD session is established between the WFD source and the WFD sink to provide a screen sharing service will be described.

FIG. 6 is a ladder diagram for explaining a process in which the WFD session is established between the WFD source and the WFD sink to provide the screen sharing service according to an embodiment of the present disclosure.

One or more of processes in FIG. 6 may be supported by a Wi-Fi direct standard document.

A display service in WFDS may refer to a service and application that enable screen sharing between P2P devices. A P2P service utilizing the display service may be referred to as the WFD device, and in the WFD devices, a device that supports streaming of a multimedia content through a device P2P link may be referred to as the Wi-Fi display (WFD) source, and a device that receives the multimedia content from the WFD source device through the P2P link to render the multimedia content may be referred to as the WFD sink.

The WFD source 10 may be a mobile terminal 500 as illustrated in FIG. 5. Thus, the WFD source 10 may include all components of the mobile terminal 500 illustrated in FIG. 5.

The WFD sink 20 may be the display device 100 illustrated in FIG. 1. Thus, the WFD sink 20 may include all components of the mobile terminal 500 illustrated in FIG. 1.

Referring to FIG. 6, the WFD source 10 may display an image on a screen (S600).

In an embodiment, the image displayed on the screen may be an image of s media content.

In another embodiment, in the case that the WFD source 10 is the mobile terminal 500 as illustrated in FIG. 5, the image displayed on the screen may be an image that the mobile terminal 500 is displaying, such as a home screen of the mobile terminal 500, an execution screen of an application installed on the mobile terminal 500, etc.

Thereafter, the WFD source 10 and the WFD sink 20 may discover each other's presence prior to WFD connection setup through WFD device discovery (S601). Specifically, the WFD devices may recognize each other's presence through a probe request frame and a probe response frame, which includes WFD information elements (WFD IEs). The WFD information elements may include basic information for establishing optimal connection between the WFD devices, such as the device type and device state. When the WFD device receives the probe request frame including the WFD IE, it may transmit the probe response frame including its own WFD IE in response thereto. In the case that the WFD device is associated with the AP and operates as the Wi-Fi P2P device, two or more Wi-Fi transceivers will logically operate in one physical device. Here, the Wi-Fi direct transceiver is used to search for the WFD device. The probe request frame for the discovery of the WFD device may include not only the WFD IE but also the P2P information element (IE), which may be decoded by the Wi-Fi direct transceiver.

Thereafter, the WFD source 10 and the WFD sink 20 may discover each other's service capabilities prior to the WFD connection setup (S603). Specifically, when one WFD device transmits a service discovery request frame in which WFD capabilities are included as an information subelement, another WFD device may transmit the service discovery response frame in which its WFD capabilities are included as the information subelement in response thereto. The service discovery procedure may be an optional procedure, and the WFD device that supports a service discovery procedure may perform the service discovery procedure together with the discovered WFD device that supports the service discovery procedure. To perform the service discovery procedure, the probe request frame and the response frame used in the device discovery procedure may include information indicating whether that the WFD device has the capability to support the service discovery procedure.

Thereafter, the WFD source 10 or the WFD sink 20 may select a peer WFD device for the WFD connection setup. The peer WFD device to be set up for the WFD connection may be selected by the user input, or the peer WFD device to be set up for the WFD connection may be selected automatically based on policy.

Thereafter, the WFD device may select a WFD connection setup method together with the selected peer WFD device (S605). Specifically, the WFD device may establish the WFD connection with either a connectivity scheme of the Wi-Fi P2P and tunneled direct link setup (TDLS). The WFD devices may determine a connectivity scheme based on preferred connectivity information and the associated BSSID subelement carried together with the WFD information element.

When the WFD setup is successfully performed between the WFD devices using the Wi-Fi P2P or the TDLS, the WFD devices may proceed with WFD capability negotiation (S607). Specifically, the WFD source 10 and the WFD sink 20 may determine a parameter set defining an audio/video payload during the WFD session by exchanging a message using a real-time streaming protocol (RTSP). The WFD source 10 and the WFD sink 20 may exchange their specification information with each other.

The WFD source 10 may inquire about the capabilities of the WFD sink 20 using the RTSP protocol, and in response, the WFD sink 20 may transmit its capabilities information to the WFD source 10. For example, the WFD sink 20 may transmit resolution information including resolutions that are capable of being supported by oneself. For example, the WFD sink 20 may transmit resolution information, includes a resolution that is capable being supported by one self, which corresponds to a screen ratio of 16:9 or 4:3, to the WFD source 10. Here, the resolution corresponding to 16:9 or 4:3 may be only an example and may be a resolution corresponding to a screen ratio in which a width is longer than a height.

Conversely, the WFD source 10 may also transmit the resolution information including the resolutions that are capable of being supported by oneself to the WFD sink 20.

In the WFD capability negotiation process with the WFD sink 20, the WFD source 10 may transmit a necessary request message to the WFD sink 20 using the RTSP protocol (S609). For example, the WFD source 10 may transmit a message including a content, which includes an image of a video content corresponding to a specific resolution based on the resolution information received from the WFD sink 20, using the RTSP protocol. More specifically, the WFD source 10 may select one of a plurality of resolutions, which is capable of being supported by the WFD sink 20 and may transmit the message for transmitting an image of a video content having the selected resolution to the WFD sink 20. That is, the WFD source 10 may select one of the plurality of resolutions and transmit a message indicating that it will transmit the image of the selected resolution to the WFD sink 20.

The WFD sink 20 may transmit a response message through the RTSP protocol based on the request message received from the WFD source 10 (S611).

In an embodiment, the resolution selected by the WFD source 10 may not be included in the resolutions that are capable of being supported by the WFD source 10. That is, the resolution of the image being displayed by the WFD source 10 may not be included in the resolutions that are capable of being supported by the WFD sink 20. Operations S609 and S611 may be included in the WFD capability negotiation process (S607).

When the WFD capability negotiation process is successfully completed, the WFD session (or Miracast session) may be established between the WFD source 10 and the WFD sink 20, and audio and video contents may be streamed from the WFD source 10 to the WFD sink 20 (S613).

In an embodiment, the WFD sink 20 may display the entire image of the streamed video content.

In the drawing below, it is assumed that the WFD source 10 is the mobile terminal 500 described in FIG. 5, and the WFD sink 20 is the display device 100 described in FIG. 1.

Thus, the WFD source 10 may include all the components of the mobile terminal 500 illustrated in FIG. 5. Likewise, the WFD sink 20 may also include all the components of the display 100 illustrated in FIG. 1.

FIG. 6 is a view for explaining a process of changing a capture time point according to a viewing situation of the transmission-side display device when the screen sharing service is provided according to an embodiment of the present disclosure.

A first display device 100-1 may be a transmission-side device that acts as a source device, and a second display device 100-2 may be a reception-side device that acts as a sink device.

The first display device 100-1 may include an image decoding unit 710, a first scaler 720, a sub-scaler 730, an encoder 740, a PQ controller 750, a second scaler 760, a wireless communication unit 173, and a display unit 180.

The image decoding unit 710, the first scaler 720, the PQ controller 750, the second scaler 760, the sub-scaler 730, and the encoder 740 may be components included in the control unit 170.

The image decoding unit 710 may decode an image received from an external device. That is, the image decoding unit 710 may decode an encoded image. The image may be a video or a streaming image.

The first scaler 720 may perform the first scale on the decoded image. The first scaling may be downscaled.

A capture time point of the video output from the first scaler 720 may be a first capture time point. The first capture time point may represent a time point at which only the video excluding an OSD or caption is captured.

In the related art, the image captured at the first capture time point is transmitted to the second display device 100-2. The image captured at the second capture time point is an image of which image quality is adjusted to match specifications of the first display device 100-2. However, in the case that the image of which image quality is adjusted is transmitted in a state in which specifications of the second display device 100-2 are unknown, deterioration of the mirroring image may occur.

The sub-scaler 730 may perform additional scaling on a primary scaled video.

The encoder 740 may encode the video output from the sub-scaler 730.

The encoder 740 may transmit the encoded video to the wireless communication unit 173.

The picture quality (PQ) controller 750 may process picture quality of the primarily scaled video.

The PQ controller 750 may perform Dolby vision or HDR settings on the primarily scaled video. The PQ controller 750 may apply values of one or more quality factors for Dolby vision or HDR to the primarily scaled video.

The second scaler 760 may perform secondary scaling on the image processed by the PQ controller 750 into a form that is suitable for outputting the image to the display unit 180. The secondary scaling may be upscaling.

The secondarily scaled video may be displayed through the display unit 180.

In addition, the secondarily scaled video and the OSD image may overlap each other to be transmitted to the display unit 180.

That is, a time point at which the OSD image is added may be before the video is output to the display unit 180.

The time point at which the video and OSD output from the display unit 180 are captured may be the second capture time point.

The wireless communication unit 173 may transmit the encoded image to the second display device 100-2 according to a short-range wireless communication standard.

The wireless communication unit 173 or the control unit 170 may determine either the first capture time point or the second capture time point depending on a viewing situation of the first display device 100-1.

For example, in the case that it is determined as the first capture time point, only the video may be transmitted to the second display device 100-2 through the wireless communication unit 173.

When the second capture time point is determined, the video and OSD image or video and the caption may be transmitted to the second display device 100-2 through the wireless communication unit 173.

The first display device 100-1 may transmit the captured content image to the second display device 100-2 according to the first capture time point. In this case, the content image may be an image that has not undergone any quality processing.

The first display device 100-2 may transmit the entire captured image (the content image and OSD image) to the second display device 100-2 according to the second capture time point. In this case, the entire image may be an image that has undergone image quality processing according to the PQ controller 750.

The second display device 100-2 may additionally receive image quality information in which the image quality processing is performed on the entire image from the first display device 100-1.

Embodiments of the present disclosure may be supported by standard documents disclosed in at least one of an IEEE 802 system, a 3GPP system, a 3GPP LTE, or an LTE-Advanced (LTE-A) system, a 3GPP2 system, or a Wi-Fi alliance (WFA) system, which are wireless access systems. That is, processes or portions according to the embodiments of the present disclosure that are not described to clearly reveal the technical idea of the present disclosure may be supported by the above documents. In addition, all terms disclosed in this document may be explained by the above standard document.

FIG. 8 is a sequence diagram for explaining a method for operating a wireless display system according to an embodiment of the present disclosure.

The wireless display system may include a first display device 100-1 and a second display device 100-2.

Each of the first display device 100-1 and the second display device 100-2 may include the components illustrated in FIG. 1.

In addition, it is assumed that each of the first display device 100-1 and the second display device 100-2 is connected to each other through a short-range wireless communication standard. The short-range wireless communication standard may be either a Wi-Fi or Wi-Fi direct standard.

A control unit 170 of the first display device 100-1 displays a content image on a display unit 180 (S801).

The control unit 170 of the first display device 100-1 transmits an image signal corresponding to the content image that is being displayed to the second display device 100-2 through a wireless communication unit 173 (S803).

The wireless communication unit 173 includes a Wi-Fi circuit or a Wi-Fi direct circuit.

The second display device 100-2 displays a mirroring image based on the received image signal (S805).

Thereafter, the control unit 170 of the first display device 100-1 determines whether an on-screen display (OSD) event occurs based on information (S807).

In an embodiment, the control unit 170 may determine whether the OSD event occurs based on broadcast information. The broadcast information may be either signal presence information or channel lock information.

The control unit 170 may determine that the OSD event occurs when no signal information is detected.

When the control unit 170 determines that lock setting is applied to a switched channel based on the channel lock information when switching channels, it may determine that the OSD event occurs.

In another embodiment, the control unit 170 may determine whether the OSD event occurs based on the caption information. The control unit 170 may determine that the OSD event occurs when the caption setting is turned on at the basis of the caption information during the display of the content image.

In another embodiment, the control unit 170 may determine whether the OSD event occur based on disaster notification information. The control unit 170 may determine that the OSD event occur when a disaster notification is received based on the disaster notification information.

When the control unit 170 of the first display device 100-1 determines that the OSD event occurs, an OSD image is displayed on the display unit 180 (S809).

In the case that the control unit 170 determines that the OSD event occurs, the OSD image corresponding to the OSD event may be displayed on the display unit 180.

The control unit 170 may display the OSD image to overlap the content image.

The control unit 170 of the first display device 100-1 transmits an OSD image signal corresponding to the OSD image to the second display device 100-2 through the wireless communication unit 173 (S811).

The control unit 170 of the first display device 100-1 may transmit a content image signal and the OSD image signal corresponding to the content image to the second display device 100-2.

The second display device 100-2 displays an OSD mirroring image based on the received OSD image signal (S813).

FIGS. 9A and 9B are views comparing the related art with an embodiment of the present disclosure when <no signal> is detected.

Referring to FIG. 9A, when the first display device 100-1 detects the <no signal> when switching the channels, it may display a first OSD image 910 indicating that there is no input signal.

According to the related art, the first display device 100-1 did not transmit the OSD image signal corresponding to the first OSD image 910 to the second display device 100-2.

Thus, the second display device 100-2 displays the mirroring image that is being displayed before the <no signal> is detected. That is, the second display device 100-2 displays a still image 900 of the previous channel.

Referring to FIG. 9B, when the first display device 100-1 detects the <no signal> when switching the channels, it may display a first OSD image 910 indicating that there is no input signal.

According to an embodiment of the present disclosure, the first display device 100-1 may transmit the OSD image signal corresponding to the first OSD image 910 to the second display device 100-2.

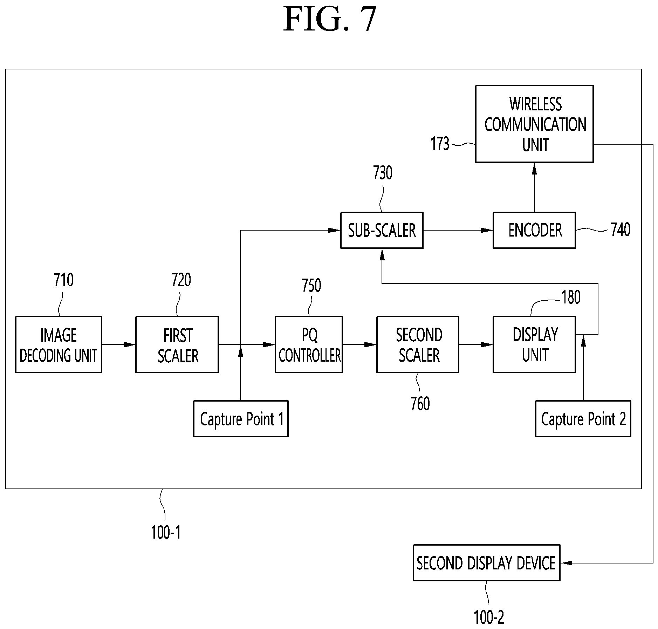

The first display device 100-1 may set a capture time point to a second capture time point in FIG. 7 to transmit the captured OSD image frame to the second display device 100-2.

Thus, the second display device 100-2 may display a first mirroring OSD image 930 corresponding to the OSD image signal.

As described above, according to an embodiment of the present disclosure, even in the case that the <no signal> is detected during provision of a screen sharing service, a user of a reception-side device may determine a viewing status of a transmission-side device through the OSD image instead of viewing the still image.

FIGS. 10A and 10B are views comparing the related art with an embodiment of the present disclosure when a lock on a switched channel is set.

Referring to FIG. 10A, when switching the channels, the first display device 100-1 may display a second OSD image 1010 indicating that the channel is locked in the case that lock setting is set for the switched channel.

According to the related art, the first display device 100-1 did not transmit the OSD image signal corresponding to the second OSD image 1010 to the second display device 100-2.

Thus, the second display device 100-2 displays a mirroring image corresponding to a broadcast image provided from the previous channel. That is, the second display device 100-2 displays the still image 1000 of the previous channel (the channel before the switching).

Referring to FIG. 10B, when switching the channels, the first display device 100-1 may display the second OSD image 1010 indicating that the channel is locked in the case that the lock setting is set for the switched channel.

According to an embodiment of the present disclosure, the first display device 100-1 may transmit an OSD image signal corresponding to the second OSD image 1010 to the second display device 100-2. That is, the first display device 100-1 may determine the capture time point of the image for mirroring as the second capture time point of FIG. 7.

The first display device 100-1 may transmit a captured OSD image frame to the second display device 100-2 in real time.

Thus, the second display device 100-1 may display a second mirroring OSD image 1030 corresponding to the OSD image frame.

As described above, according to an embodiment of the present disclosure, even in the case that the channel is switched to the locked channel while providing the screen sharing service, the user of a reception-side device may determine the viewing status of the transmission-side device through the OSD image instead of viewing the still image.

FIGS. 11A and 11B are views comparing the related art with an embodiment of the present disclosure when a caption image exists in a broadcast image.

Referring to FIG. 11A, the first display device 100-1 may display the broadcast image 1100 and the caption image 1110. The caption image 1110 may be a type of OSD image.

According to the related art, the first display device 100-1 did not transmit the OSD image signal corresponding to the caption image 1110 to the second display device 100-2.

Thus, the second display device 100-2 displays a mirroring image 1130 corresponding to the broadcast image 1100. That is, referring to FIG. 11B, the first display device 100-1 may display the broadcast image 1100 and the caption image 1110.

According to an embodiment of the present disclosure, the first display device 100-1 may transmit an OSD image signal corresponding to the caption image 1110 to the second display device 100-2. That is, the first display device 100-1 may determine the capture time point of the image for mirroring as the second capture time point of FIG. 7.

The first display device 100-1 may transmit a frame of the captured caption images 1110 to the second display device 100-2 in real time.

Thus, the second display device 100-1 may display a mirroring caption image 1150 corresponding to the frame of the caption image 1110.

As described above, according to an embodiment of the present disclosure, when the caption exists in the content image during the provision of the screen sharing service, the user of the reception-side device may view both the content image and the caption image.

Therefore, the viewing situation for the reception-side user may be more comfortable.

FIGS. 12A and 12bB are views comparing the related art with an embodiment of the present disclosure when a disaster notification occurs.

Referring to FIG. 12A, the first display device 100-1 may display a third OSD image 1210 indicating the disaster notification while playing a broadcast image 1200.

According to the related art, the first display device 100-1 did not transmit the OSD image signal corresponding to the third OSD image 1210 to the second display device 100-2.

Thus, the second display device 100-2 displays only a mirroring image 1230 corresponding to the broadcast image 1200.

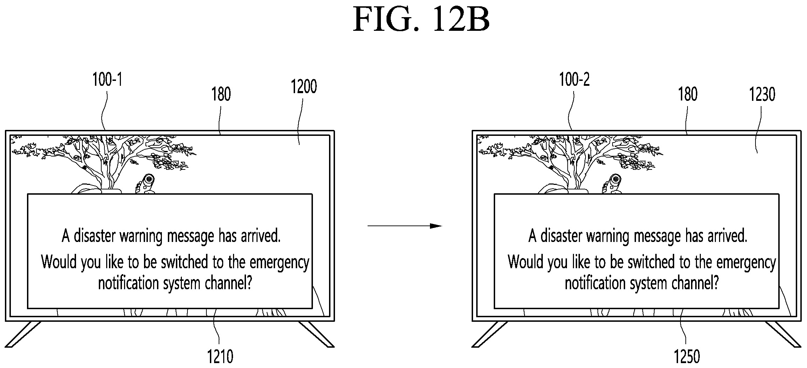

Referring to FIG. 12B, the first display device 100-1 may display the third OSD image 1210 indicating the disaster notification during the display of the broadcast image 1200.

According to an embodiment of the present disclosure, the first display device 100-1 may transmit an OSD image signal corresponding to the third OSD image 1210 to the second display device 100-2. That is, the first display device 100-1 may determine the capture time point of the image for mirroring as the second capture time point of FIG. 7.

The first display device 100-1 may transmit a captured OSD image frame to the second display device 100-2 in real time.

Thus, the second display device 100-1 may display a mirroring image 1230 corresponding to the broadcast image 1200 and a third mirroring OSD image 1250 corresponding to the OSD image frame.

As described above, according to an embodiment of the present disclosure, when the disaster notification occurs while watching the broadcast image, the user of the reception-side device may also watch the OSD video regarding the disaster notification to quickly identify the mirroring situation and the disaster situation.

FIGS. 13 and 14 are views for explaining channel state information acquired by the transmission-side display device according to an embodiment of the present disclosure.

Referring to FIG. 13, the control unit 170 of the first display device 100-1 may acquire channel state information 1300.

The control unit 170 may acquire first channel state information 1300 including information on a switched channel from an unshielded twisted pair (UTP) module provided inside the first display device 100-1.

The unshielded twisted pair (UTP) module may be included in a network interface unit 133 or a tuner 131. The first channel state information 1300 may be received from a broadcasting station connected to the network interface unit 133 or the tuner 131.

The first channel state information 1300 may include a channel screen saver type field.

The control unit 170 may receive channel state information whenever the channel is switched.

The channel screen saver type may include information indicating whether the channel is locked. For example, in the case that the channel screen saver type is a <Channel Blocked> type 1310, the channel may be locked.

The control unit 170 may determine that the switched channel is locked when the channel screen saver type included in the first channel state information 1300 is the <Channel Blocked> type. The control unit 170 may display an OSD image indicating that the channel is locked on the display unit 180 when the switched channel is locked.

Referring to FIG. 14, second channel state information 1400 is illustrated. The second channel state information 1400 may include a channel screen saver type indicating whether there is no signal provided on the corresponding channel.

For example, the channel screen saver type may include a <No Signal> type 1410.

In the case that the channel screen saver type included in the second channel state information 1400 is the <No Signal> type, the control unit 170 may determine that a broadcast signal provided from the switched channel does not exist. In the case that the control unit 170 determines that the state of the switched channel is the <no signal> type, an OSD image indicating the <no signal> state may be disposed on the display unit 180.

As described above, according to an embodiment of the present disclosure, the transmission-side device may determine whether the switched channel is in the locked state or the no signal state based on the channel state information.

FIGS. 15A to 15C are views for explaining the disaster notification information for each country according to an embodiment of the present disclosure.

The control unit 170 of the first display device 100-1 may receive the disaster notification information from the UTP module. The disaster notification information may include information intended to inform of a disaster status.

The format of the disaster notification information may vary for each country.

The first disaster notification information 1510 of FIG. 15A may be information received by a display device provided in Indonesia, the second disaster notification information 1530 may be information received by a display device provided in Japan, and the third disaster notification information 1550 may be information received by a display device provided in North America.

The control unit 170 may determine that the disaster notification occurs when a value of a status field included in the first disaster notification information 1510 is <AWAS> 1511.

The control unit 170 may determine that the disaster notification occurs in the case that a value of a class field included in the second disaster notification information 1530 is <EWS> 1531.

The control unit 170 may determine that the disaster notification occurs in the case that a value of a title field included in the third disaster notification information 1550 is <Blue Alert> 1551.

When the control unit 170 may detect the occurrence of the disaster notification, an OSD image indicating the occurrence of the disaster notification may be displayed on the display unit 180.

As described above, the transmission-side display device may detect the occurrence of the disaster notification based on the disaster notification information.

FIG. 16 is a view for explaining caption information according to an embodiment of the present disclosure.

Referring to FIG. 16, caption information 1600 is illustrated. The caption information 1600 may be received together with the content image from the network interface unit 133.

The caption information 1600 may include a caption enable field indicating whether the caption is enabled. The control unit 170 may determine that the caption exists for the content image when the value of the caption enable field is <On> 1610. The control unit 170 may display a caption OSD image corresponding to the caption together with the content image on the display unit 180.

Conversely, the control unit 170 may determine that there is no caption for the content image when the value of the caption enable field is <off>.

FIG. 17 is a view for explaining a process in which an OSD image generated by a user input is not transmitted when mirroring according to an embodiment of the present disclosure.

Referring to FIG. 17, the first display device 100-1 displays a content image 1700, and the second display device 100-2 displays a mirroring image 1730 corresponding to the content image 1700.

The first display device 100-1 may receive a command for outputting a menu image from a remote control device 200 and may display an OSD menu image 1710 on the display unit 180 according to the received command.

The first display device 100-1 may not transmit an image signal corresponding to the OSD menu image 1710 to the second display device 100-2 when the OSD menu image 1710 is displayed based on a user input, such as a command from the remote control device 200.

Since the OSD menu image 1710 is an image for menu manipulation of the first display device 100-1, there is no need to show the OSD menu image 1710 to the user of the second display device 100-2.

When the OSD image is displayed based on the command received through a user input interface unit 150, the first display device 100-1 may not transmit the image signal corresponding to the OSD image to the second display device 100-2.

When the OSD image is displayed based on the command received through the user input interface unit 150, the first display device 100-1 may determine a capture time point of the image as a first capture time point.

FIG. 18 is a view for explaining a process in which an OSD image containing user information is not transmitted when mirroring according to an embodiment of the present disclosure.

Referring to FIG. 18, the first display device 100-1 displays a content image 1800 and an OSD image 1810, which are execution screens of an application providing a streaming service, and the second display device 100-2 displays a mirroring image 1830 corresponding to the content image 1800.

In the case that user information is included in the OSD image 1810, the first display device 100-1 may not transmit an OSD image signal corresponding to the OSD image 1810 to the second display device 100-2. The user information may include one or more of a user's viewing history and user's subscription information.

In this way, according to an embodiment of the present disclosure, when mirroring, the transmission-side device may not transmit an image including the user information to the reception-side device. Thus, the privacy of the user of the transmission-side device may be protected.

FIG. 19 is a view for explaining a process of mirroring only a partial image, rather than the entire image, in a specific situation according to an embodiment of the present disclosure.

Referring to FIG. 19, the first display device 100-1 displays a first content image 1910 and a second content image 1930.

Each of the first content image 1910 and the second content image 1930 may be an image of a broadcast channel and may be played back using a multi-view function.

In the case that an age restriction is set for the channel corresponding to the second content image 1930, the first display device 100-1 may transmit only an image signal corresponding to the first content image 1910 to the second display device 100-1.

The second display device 100-2 may only display a mirroring image 1950 corresponding to the first content image 1910.

As described above, according to an embodiment of the present disclosure, when mirroring, only a partial image, rather than the entire image, may be mirrored depending on a specific situation.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A wireless device for providing a screen sharing service with an external device, the wireless device comprising:
a display unit configured to display a content image;
a wireless communication unit configured to transmit a content image signal corresponding to the content image to the external device; and
a control unit configured to detect an occurrence of an on-screen display (OSD) event based on information, display an OSD image on the display unit based on the OSD event occurring, and transmit the content image signal and an OSD image signal corresponding to the OSD image to the external device.

2. The wireless device according to claim **1,** wherein the information comprises channel lock information about whether a channel is locked, and
wherein the control unit is configured to:
determine that the OSD event occurs based on a switched channel being locked when the channel is switched based on the channel lock information; and
transmit the OSD image signal corresponding to the OSD image that indicates a channel lock state to the external device.

3. The wireless device according to claim **1,** wherein the information comprises signal presence information on whether a signal is provided to the channel, and
wherein the control unit is configured to:
determine that the OSD event occurs based on there being no signal provided from the switched channel when the channel is switched based on the signal presence information; and
transmit the OSD image signal corresponding to the OSD image that indicates the no signal state to the external device.

4. The wireless device according to claim **1,** wherein the information comprises disaster notification information, and
wherein the control unit is configured to:
determine that the OSD event occurs when disaster notification occurs based on the disaster notification information; and
transmit the OSD image signal corresponding to the OSD image that indicates an occurrence of a disaster to the external device.

5. The wireless device according to claim **1,** wherein the information comprises caption information that indicates whether there is a caption for the content image, and
wherein the control unit is configured to:
determine that the OSD event occurs when the caption exists based on the caption information; and
transmit the OSD image signal corresponding to the OSD image that indicates the caption to the external device.

6. The wireless device according to claim 1, wherein, based on the OSD event not occurring, the control unit is configured to transmit only the content image signal to the external device.

7. The wireless device according to claim 1, wherein the control unit is configured to change a capture time point of the image transmitted to the external device according to whether the OSD event occurs.

8. The wireless device according to claim 7, wherein the control unit is configured to:
capture an image output from the display unit, on which image quality processing is performed, based on the OSD event occurring, and transmit the captured image to the external device; and
capture the content image, on which the image quality processing is not performed, based on the OSD event not occurring, and transmit the captured image to the external device.

9. A wireless display system comprising a wireless device, which is configured to provide a screen sharing service, and an external device, the wireless display system comprising:
a wireless device configured to: display a content image; transmit a content image signal corresponding to the content image to the external device; detect an occurrence of an on-screen display (OSD) event based on information; display an OSD image on the display unit based on the OSD event occurring; and transmit the content image signal and an OSD image signal corresponding to the OSD image to the external device; and
the external device configured to display a content mirroring image and an OSD mirroring image based on the content image signal and the OSD image.

10. The wireless display system according to claim 9, wherein the information comprises channel lock information about whether a channel is locked, and
wherein the wireless device is configured to:
determine that the OSD event occurs based on a switched channel being locked when the channel is switched based on the channel lock information; and
transmit the OSD image signal corresponding to the OSD image that indicates a channel lock state to the external device.

11. The wireless display system according to claim 9, wherein the information comprises signal presence information on whether a signal is provided to the channel, and
the wireless device is configured to:
determine that the OSD event occurs based on there being no signal provided from the switched channel when the channel is switched based on the signal presence information; and
transmit the OSD image signal corresponding to the OSD image that indicates the no signal state to the external device.

12. The wireless display system according to claim 9, wherein the information comprises disaster notification information, and
wherein the wireless device is configured to:
determine that the OSD event occurs when disaster notification occurs based on the disaster notification information; and
transmit the OSD image signal corresponding to the OSD image that indicates an occurrence of a disaster to the external device.

13. The wireless display system according to claim **9,** wherein the information comprises caption information that indicates whether there is a caption for the content image, and
the wireless device is configured to:
determine that the OSD event occurs when the caption exists based on the caption information; and
transmit the OSD image signal corresponding to the OSD image that indicates the caption to the external device.

14. The wireless display system according to claim **9,** wherein the wireless device is configured to change a capture time point of the image transmitted to the external device according to whether the OSD event occurs.

15. The wireless display system according to claim 14, wherein the wireless device is configured to:
capture an image output from the display unit, on which image quality processing is performed, when the OSD event occurs, and transmit the captured image to the external device; and
capture the content image, on which the image quality processing is not performed, based on the OSD event not occurring, and transmit the captured image to the external device.
